# EUROPÄISCHE PATENTSCHRIFT

(11) **EP 0 361 264 B1**
(45) Veröffentlichungstag und Bekanntmachung des Hinweises auf die Patenterteilung: **10.08.1994**
(21) Anmeldenummer: 89117241.3
(22) Anmeldetag: 18.09.1989
(51) Int. Cl.: G01S 15/89, G01S 7/52

(54) **Digitales Eingangsteil für ein Ultraschallgerät**
Digital input part for an ultrasonic apparatus
Partie d'entreé numérique pour un appareil ultrasonique

(30) Priorität: 30.09.1988 DE 8812400 U
(43) Veröffentlichungstag der Anmeldung: 04.04.1990
(73) Patentinhaber: SIEMENS AKTIENGESELLSCHAFT, 80333 München (DE)
(72) Erfinder: Hassler, Dietrich, Dipl.-Ing., D-8525 Uttenreuth (DE); Schmidt, Erhard, D-8520 Erlangen (DE); Wegener, Peter, D-8520 Erlangen (DE)

(56) Entgegenhaltungen:
- EP-A- 0 081 045
- EP-A- 0 170 072
- WO-A-81/00807
- DE-A- 3 445 169
- FR-A- 2 375 764
- GB-A- 2 088 668
- US-A- 4 324 258

## Beschreibung

Die Erfindung betrifft ein digitales Hochfrequenz-Eingangsteil für ein kombiniertes B-Bild/Doppler-Ultraschallgerät, welches Eingangsteil ein aus Elementarwandlern aufgebautes Wandlerarray umfaßt, welches zur Sendung von Ultraschallimpulsen in und zum Empfang von hochfrequenten Echosignalen aus einem Zielgebiet vorgesehen ist, mit einer B-Bild-Signalverarbeitungsschaltung, die eine Anzahl von untereinander gleichen Kanälen umfaßt, in denen jeweils ein Analog-Digital-Wandler angeordnet ist, wobei jeder Kanal einem Elementarwandler zugeordnet ist und die empfangenen hochfrequenten Echosignale dem Analog-Digital-Wandler zugeführt werden.

Arbeiten hochwertige B-Scanner mit Ultraschallfrequenzen bis 10 MHz und weisen sie eine Vielzahl komplizierter Scan-Formen auf, dann sind viele, feingestufte Umschaltvorgänge für die Strahlsteuerung und Fokussierung zu realisieren. Dafür bietet sich die digitale Verarbeitung der Hochfrequenzsignale an. Ein wesentlicher, heute noch gültiger Einwand gegen den Einsatz der Digitaltechnik zur Verarbeitung von Dopplersignalen besteht jedoch darin, daß die erforderliche Signaldynamik bei der Analog-Digital-Wandlung (A/D-Wandlung) dann nicht erreicht wird, wenn mit dem Dopplersignal gleichzeitig Festzielechos, z.B. von den Aderwandbereichen, erfaßt werden. Bildsysteme müssen aber - zumindest als Option - auch Dopplersignale gewinnen können. Handelsübliche Hochleistungsgeräte mit entsprechend niedriger Ultraschallfrequenz von z.B. 5 MHz weisen analog arbeitende Eingangsteile für Dopplersignale auf. Die ausschließliche Verwendung der Analogtechnik für das Bild wird hier aber in Zukunft nicht bestehen bleiben, weil die Nennfrequenzen bis 10 MHz nur schwer in Analogtechnik erreicht werden.

In dem Artikel von D. Hassler "Beitrag zur Systemtheorie der Ultraschall-Impuls-Doppler-Technik zur Blutströmungsmessung" in Ultraschall in der Medizin Nr. 8, 1987, Seiten 102-107, 152-154 und 192-196, sind die Eigenschaften der Dopplersignale von Blutteilchen analysiert. Danach haben die Blutteilchen (Bewegtziele) aus dem kleinen Signaleinzugsgebiet einer Ader maximal 30 bis 40 dB Dynamik und liegen typischerweise 30 bis 40 dB unterhalb der Amplitude von Festzielechos aus dem Gewebe. Wegen der begrenzten Ortsauflösung ist es insbesondere bei aderwandnahen Signaleinzugsgebieten unvermeidlich, daß Fest- und Bewegtzielechos gleichzeitig auftreten. Sie sind nur aufgrund der Frequenzverwerfung der Bewegtzielechos gegenüber den Festzielechos unterscheidbar. Man muß also Filterverfahren zur Trennung anwenden. Dies setzt voraus, daß die lineare Superposition der beiden Anteile in der Signalflußkette bis zur Filterung erhalten bleibt. Mischungen an nichtlinearen Kennlinien sind zu vermeiden.

Werden bei Ultraschallgeräten, wie z.B. in der EP-PS 0 010 304 angegeben, neben den Bildsignalen auch Dopplersignale vom bildgebenden Applikator gewonnen, ist dies, solange mechanische Scanner oder elektronische Scanner mit analoger Signalverarbeitung für Schwenk- und/oder Fokussierung verwendet werden, bei Einhaltung des erforderlichen Störabstandes auch möglich.

Andererseits stellen digital arbeitende Eingangsteile die technisch optimale Lösung für hochwertige Scanner dar. Bei Hochleistungsgeräten erwartet man die Anwendbarkeit von Ultraschall-Nennfrequenzen zwischen 2 und 10 MHz und mehrere Scan-Formen, wie z.B. elektronischer Sektor-Scan, Trapez-Scan und Parallel-Scan ohne Randüberstand. Die genannten Anforderungen zwingen zu einem großen Bereich für die Signalverzögerung bei sehr feingestufter Veränderbarkeit. Die dafür am weitesten entwickelte Technik besteht in der digitalen Verzögerung der HF-Signale.

Die Digitaltechnik verwendet bei typischerweise 64 Eingangskanälen 64 Analog/Digital-Wandler (A/D-Wandler) mit 8 Bit bei einer Abtastrate von maximal 40 MHz. Dies ist ausreichend für die Bildgewinnung. Um die schon erwähnte, nichtlineare Kennlinie zu vermeiden, ist bei Doppleranwendung eine Bitbreite von mindestens 14 Bit notwendig, da 30 bis 40 dB zusätzliche Dynamik 6 Bit zusätzlich erfordern. Die Grenze des technisch Machbaren liegt aber derzeit bei 12 Bit bei einer Abtastrate von 20 MHz.

Ein digitales Hochfrequenz-Eingangsteil der eingangs genannten Art ist aus der EP-A-0 170 072 bekannt. Dort ist das Eingangsteil für ein Phased-Array-Geräte zur B-Bilddarstellung ausgebildet und umfaßt eine Anzahl von untereinander gleichen Kanälen, in denen jeweils ein Analog-Digital-Wandler angeordnet ist. Jeder Kanal ist jeweils einem Elementarwandler eines Wandlerarrays zugeordnet. Die Digitalisierung der Hochfrequenz-Echosignale in den einzelnen Kanälen erlaubt eine digitale Verzögerung und anschließende Summation zur Fokussierung und/oder Sektorabtatung. Wünschenswert wäre nun, dasselbe digitale Eingangsteil auch zur Gewinnung von Dopplersignalen zu verwenden. Das stößt jedoch, wie oben schon erwähnt, wegen des großen Dynamikbereichs der zu verarbeitenden Echosignale auf Schwierigkeiten bei der technischen Realisierung.

Andererseits ist aus der US-A-4 324 258 ein reines Ultraschall-Dopplergerät bekannt, mit dem die Blutflußgeschwindigkeit gemessen oder die Anatomie einer Blutströmung bildlich dargesellt werden kann. Dazu werden die von einem Einzelwandler empfangenen, analogen Hochfrequenz-Echosignale demoduliert und anschließend einem Filter zugeführt, welches Anteile von unbeweglichen Grenzflächen in den Echosignalen unterdrückt, so daß nur die Dopplersignale aus den Echosignalen weiterverarbeitet werden. Ein der Dopplerfrequenz entsprechendes Signal kann ausgegeben und angezeigt werden. Mit diesem Gerät kann kein B-Bild der Anatomie dargestellt werden. Durch die Verwendung eines einzelnen Wandlers anstatt eines Wandlerarrays kann mit diesem Gerät nicht in verschiedene Tiefen fokussiert werden. Außerdem ist es nicht möglich, die eingangs erwähnten unterschiedlichen Scan-Arten durchzuführen.

Auf dem Gebiet der Radar- und Mikrowellentechnik ist aus der GB-A-2 088 668 bekannt, mit einer Array-Antenne die störenden Echosignale von See- oder Landoberflächen durch Änderung der Form des Abtaststrahles oder der Empfindlichkeitsverteilung in einer Ebene, die senkrecht auf der See- oder Landoberfläche steht, verwendet. Die Änderung erfolgt in Abhängigkeit der Oberflächenbeschaffenheit. Festzeile in der Umgebung eines vom Radarstrahl erfaßten Bewegtzieles werden zusätzlich durch ein digitales MTI-Filter unterdrückt. Ziel ist die anschließliche Erfassung von Bewegtzielen. Eine der B-Bild-Darstellung entsprechende Darstellung von Festzielen ist nicht erwünscht.

Der Erfindung liegt nun die Aufgabe zugrunde, eine Schaltung anzugeben, die bei einem kombinierten Ultraschall-B-Bild- und Dopplergerät die Gewinnung von Dopplersignalen auch mit der digitalen Eingangstechnik der B-Bild-Signalverarbeitungsschaltung erlaubt.

Die Aufgabe wird dadurch gelöst, daß die Ausgänge der Analog-Digital-Wandler mit jeweils einer Doppler-Signalverarbeitungsschaltung zur Gewinnung von hochfrequenten Dopplersignalen von Bewegzielechos verbunden ist, daß die in den Kanälen angeordnete, für B-Bildgebung und Dopplersignale gemeinsame Signalverarbeitungsschaltung vor dem Analog-Digital-Wandler jeweils einen Subtrahierer, der bei mehreren aufeinanderfolgenden Sendeimpulsen in dasselbe Zielgebiet von den einem ersten Eingang zugeführten augenblicklichen Echosignalen die einen zweiten Eingang zugeführten Echosignale des vorangegangenen Ultraschall-Impulses zeitrichtig abzieht, und einen darauffolgenden Verstärker mit umschaltbarem Verstärkungsfaktor umfaßt, wobei die Doppler-Signalverarbeitungsschaltung nach dem Analog-Digital-Wandler einen Umschalter aufweist, der in Abhängigkeit des gewählten Verstärkungsfaktors des Verstärkers die einzelnen Bits des Analog-Digital-Wandlers unterschiedlich gewichtet einem ersten Eingang eines Addierers zur weiteren Signalverarbeitung zuführt.

Nun kommt die Schaltung mit Analog-Digital-Wandlern kleiner Bitbreite aus und es können Komponenten verwendet werden, die so preiswert sind, daß ein vielfacher Aufbau, z.B. für 64 Kanäle, preislich günstiger ist als ein zusätzliches Analogteil für Doppler.

Weiterhin ist dadurch die Dynamik des zu digitalisierenden Signals gesenkt und das Problem der Verarbeitung von Signalen mit großem Dynamikumfang auf die leichter zu realisierende Digital-Analog-Wandlung verlagert.

Eine weitere vorteilhafte Ausgestaltung der Erfindung zeichnet sich dadurch aus, daß ein zweiter Speicher vorgesehen ist, in dem nach einer zwei Abgleichschritte umfassenden Abgleichphase Korrekturwerte gespeichert sind und daß die Korrekturwerte die Amplitudenfehler der analogen Bauteile und des Digital-Analog- Wandlers in dem Zweig kompensieren sollen, über den das vorgegangene Signal dem Subtrahierer zugeführt wird, wobei in der Abgleichphase die Differenz von aus einem Testsignal in einem ersten Abgleichschritt gewonnenen Signalen und den aus demselben Testsignal in einem zweiten Abgleichschritt gewonnenen Signale als Korrekturwerte im zweiten Speicher abgelegt werden.

Da nun die Amplitudenfehler der Bauteile kompensiert werden, kann bei der Realisierung der Schaltung auf hochgenaue und damit teure Bauteile verzichtet werden.

Weitere Vorteile ergeben sich aus den Unteransprüchen und der Figurenbeschreibung. Es zeigen:
- FIG 1: das Grundprinzip zur Unterdrückung von Festzielechos nach dem Stand der Technik,
- FIG 2: das digitale Eingangsteil eines kombinierten Ultraschall-Bild- und Dopplergerätes mit einem 14 Bit-D/A-Wandler,
- Fig. 3: das digitale Eingangsteil eines kombinierten Ultraschall-Bild- und Dopplergerätes mit einem 8-Bit- und einem 6-Bit-D/A-Wandler und mit einer Fehlerkorrekturschaltung,
- Fig. 4: das digitale Eingangsteil nach Fig. 3 mit einer ersten Variante der Fehlerkorrekturschaltung,
- Fig. 5: das digitale Eingangsteil nach Fig. 3 mit einer zweiten Variante der Fehlerkorrekturschaltung.

Die Grundidee, wie dem digitalen Konzept bei B-Bildgeräten auch die Dopplertechnik erschlossen werden kann, ist aus dem Artikel von M. Brandestini: "Topoflow - A Digital Full Range Doppler Velocity Meter", IEEE Trans. Sonics Ultrasonics, Vol. 25, Nr. 5, September 1978, Seiten 287-293, dargestellt.

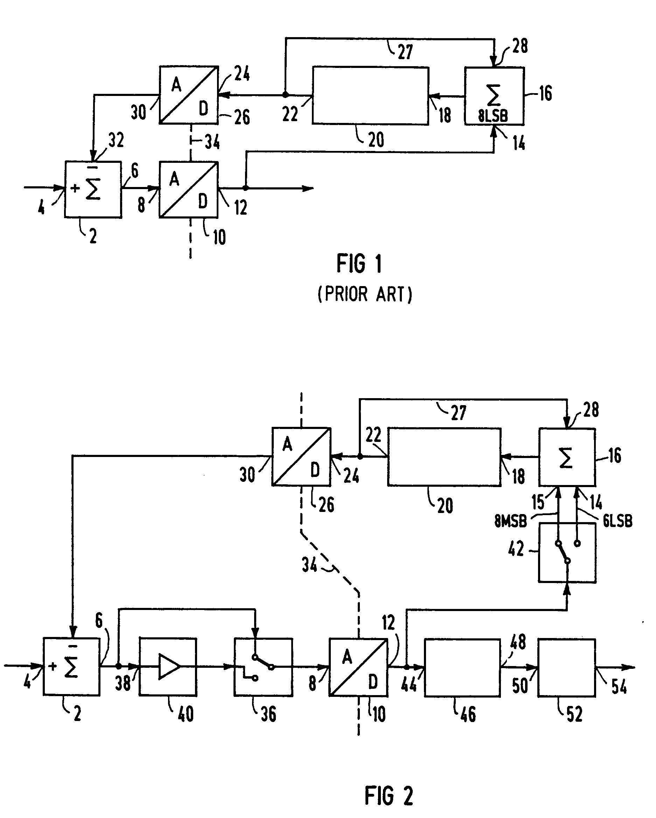

Figur 1 zeigt dieses Grundprinzip. Dabei handelt es sich um eine Schaltung zur Unterdrückung der Festzielechos durch ein Filter erster Ordnung und zur Digitalisierung der Bewegtzielechos. Das Summensignal eines Empfangs-Wandlerarrays ist dem Pluseingang 4 eines analogen Subtrahierers 2 zugeführt. Der Ausgang 6 ist mit dem Eingang 8 eines Analog-Digital-Wandlers oder A/D-Wandlers 10 verbunden. Der A/D-Wandler 10 digitalisiert das Analogsignal mit 8 Bit. Das Signal am Ausgang 12 des A/D-Wandlers 10 ist sowohl einer weiteren Signalverarbeitungsschaltung zugeführt (nicht gezeigt) als auch einem Eingang 14 eines digitalen 16-Bit-Addierers 16. Dabei sind jedoch nur die acht niedrigstwertigen oder least significant Bits (8 LSB) am Eingang 14 belegt. Der Ausgang des Addierers 16 ist mit dem Eingang 18 eines 16 Bit-Speichers 20 verbunden. Seine Speicherkapazität beträgt 128 Worte. Der Speicher 20 ist nach dem Prinzip "first in-first out (FIFO)" organisiert. Der Ausgang 22 des Speichers 20 ist einerseits mit dem Eingang 24 eines 16 Bit-Digital-Analog-Wandlers oder D/A-Wandlers 26 verbunden und andererseits über eine Rückführung 27 mit dem zweiten Eingang 28 des Addierers 16. Der Analog-Ausgang 30 des D/A-Wandlers 26 ist mit dem invertierenden Eingang 32 des Subtrahierers 2 verbunden.

Das Prinzip arbeitet folgendermaßen: Die Echosignale von einem Ultraschall-Abtaststrahl werden digital gespeichert. Die Echos auf einen nachfolgenden Sendeschuß werden von den gespeicherten des vorausgegangenen Schusses zeitrichtig abgezogen. Wenn keine Bewegung im Objekt war, ergeben sich identische Echosignale als Antwort auf die Sendeschüsse und die Differenz beider Signale ist Null. Bewegte Grenzflächen im Objekt führen zu Unterschieden, die umso größer sind, je schneller die Bewegung ist. Das Differenzsignal stellt also das linear frequenzbewichtete (differenzierte) Dopplersignal dar. Die Digitalisierung wird nur mit der Bit-Tiefe durchgeführt, die das Differenzsignal erfordert. Das viel größere Wortbreite erfordernde Festzielecho wird durch vielfache Aufaddition von anfangs übersteuerten Differenzsignalen langsam gewonnen. Die Rückwandlung ins Analoge ist möglich, weil D/A-Wandler leichter als A/D-Wandler zu realisieren sind.

Im Blockschaltbild nach Figur 1 stellt sich der geschilderte Vorgang wie folgt dar: Das analoge Differenzsignal vom Subtrahierer 2 wird von dem A/D-Wandler 10 mit 8 Bit gewandelt und über den 16 Bit-Addierer 16 in den Speicher 20 eingeschrieben. Wenn der Speicher 20 anfangs leer ist, wird über die Rückführung 27 dem Addierer 16 nur der Wert Null zugefügt, so daß das Ausgangssignal des A/D-Wandlers 10 original eingeschrieben wird. Da der Subtrahierer 2 ebenfalls anfangs nur den Wert Null subtrahiert, erhält der A/D-Wandler 10 im ersten Schritt das volle Festzielecho. Da dieses viel stärker ist als die Bewegtzielechos, wird der A/D-Wandler 10 übersteuert. Daher wird sehr häufig der Maximalwert des 8 Bit-Worts als LSB-Wert in den Speicher 20 eingeschrieben. Dieser Vorgang wiederholt sich so oft, bis die Differenz auch für große Signalamplituden so klein wird, daß der A/D-Wandler 10 nicht mehr übersteuert wird. Ab dann stellt das Ausgangssignal dieses Wandlers 10 das differenzierte und gepulste Dopplersignal in digitaler Form dar. Die gestrichelte Linie 34 gibt die Grenze zwischen dem Analog- und Digitalteil an.

Während das Verfahren nach dem Stand der Technik in Figur 1 auf ein Summensignal des Wandler-Arrays angewendet wurde, wird hier gemäß der Erfindung jedem Empfangskanal eines elektronischen Array-Sektor-Scanners, d.h. dem unverzögerten Signal eines jeden Elementarwandlers des Arrays, ein solches System zugeordnet.

Gleiche Funktionsgruppen sind mit den gleichen Bezugszeichen in Figur 1 und Figur 2 gekennzeichnet. Am analogen Eingang 4 des Subtrahierers 2 ist nun nicht mehr das Summensignal, sondern das unverzögerte Signal eines Elementarwandlers des Arrays - eventuell über einen Tiefenausgleichsvestärker - zugeführt. Der Ausgang 6 des Subtrahierers 2 ist einerseits über einen Umschalter 36 mit dem Eingang 8 des A/D-Wandlers 10 verbunden. Andererseits ist der Ausgang 6 mit dem Eingang 38 eines Verstärkers 40 über den Umschalter 36 mit dem Eingang 8 verbunden. Der Verstärker 40 hat einen Verstärkungsfaktor von v = 64. Der Verstärker 40 in Verbindung mit dem Umschalter 36 bildet einen Verstärker mit umschaltbarem Verstärkungsfaktor, hier betragen die wählbaren Verstärkungsfaktoren v = 1 und v = 64. Der A/D-Wandler wandelt das analoge Signal mit einer Abtastrate von 30 MHz in ein digitales 8 Bit-Signal um. Der Ausgang 12 des A/D-Wandlers ist nun über einen Umschalter 42 mit dem Addierer 16 verbunden. Es handelt sich hier bei dem Addierer 16 um einen 14 Bit-Addierer. Der Umschalter 42 erlaubt zum einen die Zuführung des 8 Bit-Worts über den Eingang 15 an die 8 "most significant bits (8 MSB)" und zum andern über den Eingang 14 an die 6 "least significant bits (6 LSB)" des Addierers 16.

Der Speicher 20 hat hier eine Kapazität von 4000 Worten mit 14 Bit Länge und ist nach dem Prinzip "first in-first out (FIFO)" organisiert. Der Ausgang 22 ist über die Rückführung 27 mit dem Eingang 28 des Addierers 16 verbunden. Der Ausgang 30 des D/A-Wandlers 26 ist mit dem Eingang 32 des Subtrahierers verbunden.

Zur weiteren Signalverarbeitung ist der Ausgang 12 des A/D-Wandlers 10 mit dem Eingang 44 eines Signalspeichers 46 verbunden. Das digitalisierte Doppler-Differenzsignal wird im Speicher 46 über eine Länge von z.B. 1000 Worten mit 8 Bit-Länge bei 30 MHz Abtastrate gespeichert und entsprechend den Erfordernissen von Schwenk und Fokussierung verzögert. Bei 30 MHz Abtastrate werden entsprechend maximal 33 µs Verzögerung für den Schwenk erreicht. Das Signal wird ebenfalls mit 30 MHz ausgelesen und über den Ausgang 48 dem Eingang 50 eines linearen Interpolators 52 zugeführt. Die lineare Interpolation verdoppelt scheinbar die Abtastrate, so daß sicher auch Mittenfrequenzen von 7 MHz beherrscht werden.

In einer nachfolgenden, nicht gezeigten Schaltung werden die entsprechend dem Schwenkwinkel und/oder der Fokuslage verzögerten Digitalsignale aller Kanäle aufaddiert und bilden als Summensignal das fokussiert empfangene hochfrequente Dopplersignal. Hieran kann sich mit oder ohne zwischengeschaltete Quadraturdemodulation ein weiteres digitales Kammfilter anschließen (nicht gezeigt), welches die Frequenzabhängigkeit des Übertragungsfaktors der Schaltung zur Festzielunterdrückung kompensiert. Nun steht ein frequenzunabhängig hochpaßgefiltertes Dopplersignal zur weiteren Verarbeitung zur Verfügung. Nach dieser Art der breitbandigen Trennung der Bewegtzielechos von den Festzielechos folgt typischerweise die Bildung der Tiefenbereiche durch Signalausblendung (range gates).

Um die Festzielechos mit derselben Signalverarbeitung auch für ein B-Bild erfassen zu können, ist nun zwischen dem Subtrahierer 2 und dem A/D-Wandler 10 der Verstärker 40 mit dem Umschalter 36 angeordnet. Beim Empfang der Echosignale des ersten Schusses wird ohne Vorverstärkung, d.h. direkt, das Signal digitalisiert, so daß der A/D-Wandler 10 nicht übersteuert ist. So erhält man im Signalspeicher 46 die unverfälschten Festzielechos und man kann, genau wie oben beschrieben, durch Verzögerung elektronisch schwenken und fokussieren, um ein B-Bild aufzubauen. In dem Signalspeicher 46 sind also sowohl die Bildsignale (Festzielechos) als auch die Doppler-Differenzsignale speicherbar. Die Bildsignale stehen nach dem ersten Sendeimpuls oder Schuß im Signalspeicher 46, während die Doppler-Differenzsignale nach weiteren Schüssen in dasselbe Zielgebiet im Signalspeicher 46 stehen. Die Weiterverarbeitung der Bildsignale erfolgt entsprechend, wie z.B. in der US-PS 4 373 395 (= DE-OS 29 42 049) beschrieben ist.

Im Unterschied zur Arbeitsweise der Schaltung nach Figur 1 wird dieses digitale Festzielecho nun stellenrichtig über den Umschalter 42 an die 8 MSB-Eingänge 15 des Addierers 16 gelegt. Somit steht bereits nach dem ersten Schuß ein mit 8 Bit Genauigkeit gespeichertes Echosignal für die Differenzbildung im Subtrahierer 2 zur Verfügung. Es muß nicht erst durch Aufaddition gewonnen werden. Damit wird Zeit gespart, die insbesondere dann ohnehin knapp ist, wenn ein Dopplerbild (flow imaging) hergestellt werden soll. Dabei können aus Zeitgründen nicht mehr als bis 10 Schüsse pro Abtastrichtung zugelassen werden, obwohl eine viel höhere Zahl wünschenswert wäre. Man verliert hier bei der Verwendung des 8 Bit A/D-Wandlers 10 im Vergleich zum Ideal mit einem 14 Bit-A/D-Wandler 10 nur einen Schuß pro Strahlrichtung gegenüber mehreren bei der Arbeitsweise der Schaltung nach Figur 1. Ein erstes Dopplersignal steht bei der Verwendung des 8 Bit-A/D-Wandlers 10 nach dem dritten Schuß zur Verfügung. Ab dem zweiten Schuß wird der A/D-Wandler 10 über den Vorverstärker 40 in Verbindung mit dem Umschalter 36 angesteuert. Da der Speicher 20 eine Genauigkeit der Echodarstellung von 14 Bit erlaubt, sind zu den ersten 8 Bit noch weitere 6 Bit aufzuaddieren. Dementsprechend erhält der Verstärker 40 die Verstärkung v = 2ⁿ = 2⁶ = 64 und das 8 Bit-Wort des A/D-Wandlers 10 wird durch den Umschalter 42 um n = 6 Binärstellen in Richtung auf die "least significant bits" verschoben und zum Inhalt des Speiches 20 addiert.

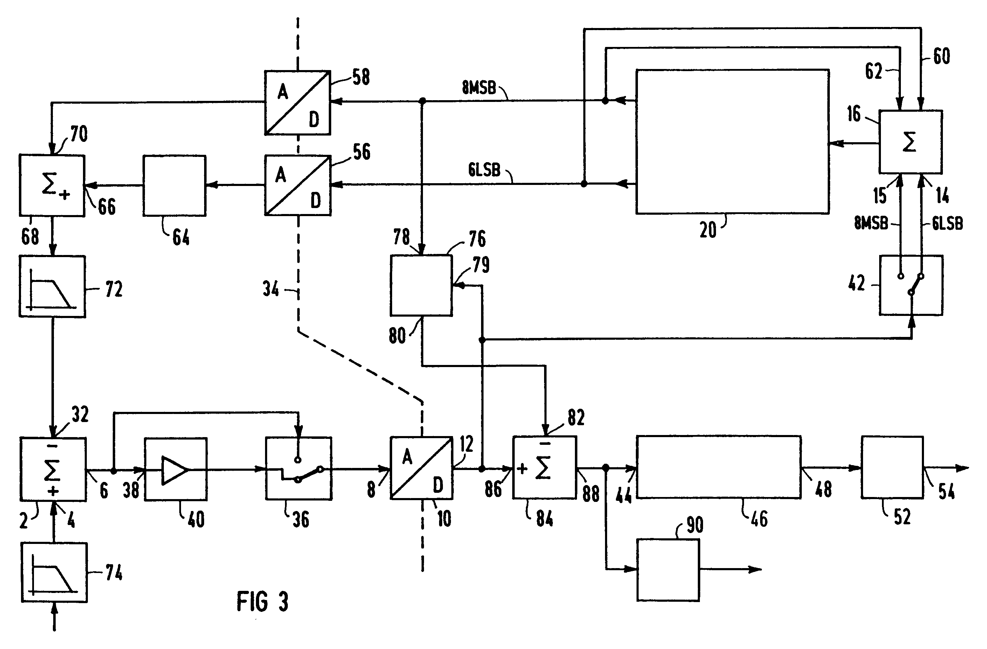

Figur 3 zeigt ein Ausführungsbeispiel, das mit zwei D/A-Wandlern kleinerer Bit-Breite auskommt als der D/A-Wandler 26 in Figur 2. Dadurch wird der teure, schnelle D/A-Wandler 26 großer Bit-Breite, z.B. 14 Bit, bei 30 MHz Abtastrate durch zwei preiswerte D/A-Wandler 56 und 58 ersetzt. Zusätzlich ist eine Fehlerkorrekturschaltung vorgesehen. Gleiche Funktionseinheiten erhalten identische Bezugszeichen wie in Figur 1 und 2.

Hier ist der D/A-Wandler 26 aus Figur 2 aufgeteilt in einen D/A-Wandler 56 für die 6 LSB und einen 8 Bit-D/A-Wandler 58 für die 8 MSB. Ebenso ist die Rückführung 27 aus Figur 2 aufgeteilt in eine 6 Bit-Rückführung 60 und eine 8 Bit Rückführung 62, die stellenrichtig mit dem Addierer 16 verbunden sind. Das Signal am Ausgang des D/A-Wandlers 56 ist über eine Abschwächerschaltung 64 dem Eingang 66 eines analogen Summierers 68 zugeführt. Die Abschwächerschaltung 64 verringert die Amplitude des Signals um den Faktor 1/64. Der Ausgang des zweiten D/A-Wandlers 58 ist dem anderen Eingang 70 des Summierers 68 zugeführt. Über ein Tiefpaßfilter 72 wird das Summensignal dem invertierenden Eingang 32 des Subtrahierer 2 zugeführt. Dem nicht invertierenden Eingang 4 ist ein gleichartiges Tiefpaßfilter 74 vorgeschaltet. Die Funktion der Tiefpaßfilter wird weiter unten erläutert.

Die nachfolgend beschriebene Fehlerkorrekturschaltung soll auch die Nichtlinearitäten der beiden D/A-Wandler 58 und 56 ausgleichen.

Ein Schreib-Lese-Speicher 76 ist mit seinem Adreßeingang 78 mit dem 8 MSB-Ausgang des Speichers 20 verbunden. Der Schreibeingang 79 des Schreib-Lese-Speichers 76 ist mit dem Ausgang des A/D-Wandlers 10 und der Leseausgang 80 mit dem invertierenden Eingang 82 eines weiteren Subtrahierers 84 verbunden. Der Subtrahierer 84 ist mit seinem Eingang 86 an den digitalen Ausgang des A/D-Wandlers 10 und mit seinem Ausgang 88 an den Speichereingang 44 angeschlossen. Der Ausgang 88 ist ebenfalls noch mit einer Übersteuerungsanzeige 90 verbunden.

Wenn der Wandler 58 eine Linearität aufweist, die für 14 Bit genau genug ist, und wenn die analoge Addition im Summierer 68 fehlerfrei geschieht, ist die Aufteilung der 14 Bit auf die zwei D/A-Wandler 56 und 58 problemlos. Tatsächlich muß man aber davon ausgehen, daß diese Idealbedingungen nicht gegeben sind. Für diesen Fall sind der Schreib-Lese-Speicher 76 und der Subtrahierer 84 vorgesehen. Im Schreib-Lese-Speicher 76 werden Korrekturwerte abgelegt, die die Fehler aller Bauteile in dem Zweig kompensieren, über den das vorangegangene Signal dem Subtrahierer 2 zugführt wird. Dieser Zweig besteht hier aus den Wandlern 56 und 58, dem Abschwächer 64, dem Summierer 68 und dem Tiefpaßfilter 72 sowie dem Subtrahierer 2. Dies geschieht auf die im folgenden beschriebene Weise.

In einer Abgleichphase des Gerätes, z.B. nach jedem Einschalten des Netzschalters, wird ein Testsignal in Form einer linearen Rampenfunktion als Analogspannung, die den maximal erfaßbaren Wert erreicht oder überschreitet, über das Tiefpaßfilter 74 an den Eingang 4 gelegt. Diese Spannung steigt nur so schnell an, daß bei der gewählten Wandlungsrate des A/D-Wandlers 10 alle 256 Binärwerte mindestens einmal auftreten. Der Speicher 20 ist zu Beginn gelöscht. Die 8 MSB werden eingeschrieben, wie bei der Beschreibung zu Figur 2 für den ersten Schuß erklärt ist. Das gleiche Testsignal wird ein zweites Mal angelegt und jetzt mit der Verstärkung 64 über den Verstärker 40 und den Umschalter 36 dem A/D-Wandler 10 zugeführt. Die so erhaltenen Digitalworte werden als LSB zu der zuvor gespeicherten Wortreihe addiert. Dabei wird auf einander zugehörige Speicherworte für die gleiche Analogspannung geachtet. Jetzt enthält der Speicher 20 das mit 14 Bit dargestellte Testsignal.

Ein erneuter Vergleich mit dem Testsignal ergäbe die Abweichung Null, wenn keine Fehler aufträten. Die in der oben gegebenen Rückführzweig aber tatsächlich vorhandenen Fehler, also z.B. die Linearitätsfehler des Wandlers 58, werden zu einem von Null verschiedenen Ausgangssignal des A/D-Wandlers 10 führen. Diese Abweichung wird nun im Speicher 76 festgehalten. Zu jedem Ausgangswert des Speichers 20, der als Adresse für den Speicher 76 aufgefaßt wird, wird der Abweichungswert am Ausgang des A/D-Wandlers 10 eingelesen. Im Normalbetrieb wird der so gespeicherte Abweichungswert von jedem gewandelten Wort des A/D-Wandlers 10 in Abhängigkeit von den 8 MSB des Speichers 20 durch den Subtrahierer 84 abgezogen, bevor die Abspeicherung im Speicher 46 als Dopplersignal erfolgt. Damit können auch billige D/A-Wandler 56 und 58 eingesetzt werden. Die Korrektur erfolgt jedoch nur amplitudenabhängig. Um die Taktfrequenzen und Umschaltsignale der D/A-Wandler 56 und 58 nicht störend in Erscheinung treten zu lassen, sind die gleichartigen Tiefpaßfilter 72 und 74 vor der A/D-Wandlung bzw. als "Anti-Aliasing-Filter" zu verwenden.

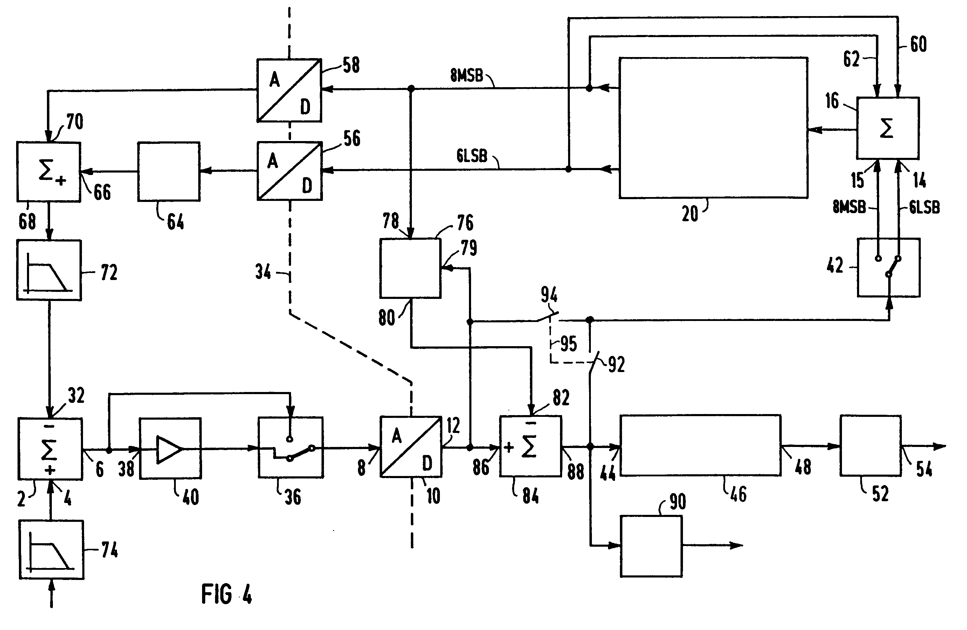

Eine Schaltungsvariante von Fig. 3 ist in Figur 4 gezeigt. Im Unterschied zur Schaltung in Figur 3 ist der Ausgang 88 des Subtrahierers 84 über einen ersten Schalter 92 mit einem Schließer mit dem Eingang des Umschalters 42 verbunden. Zusätzlich ist zwischen dem Ausgang des A/D-Wandlers 10 und dem Eingang des Umschalters 42 ein zweiter Schalter 94 mit einem Öffner eingefügt. Die Schalter 92 und 94 werden gleichzeitig, was durch die gestrichelte Linie 95 verdeutlich ist, nach dem zweiten Schuß betätigt. Das bedeutet, daß der Speicher 20 im eingeschwungenen Zustand vom korrigierten Wert aus dem Subtrahierer 84 anstatt direkt mit dem Ausgangssignal des A/D-Wandlers 10 beschrieben wird. Dadurch ist erreicht, daß ein exakter 14 Bit Wert im Speicher 20 liegt.

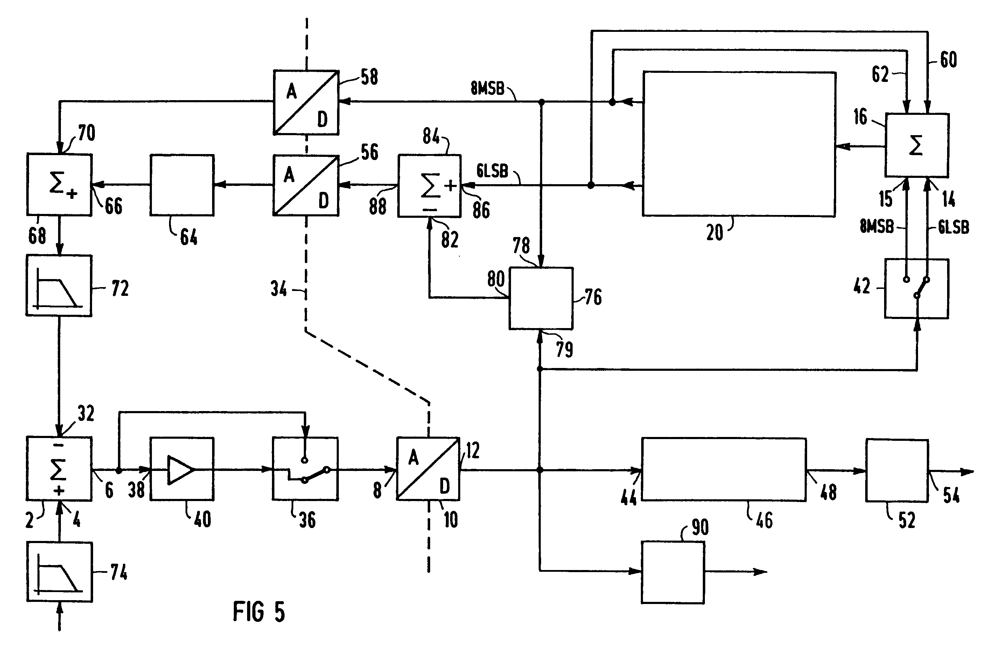

Bei einer weiteren Variante nach Figur 5 liegt der Subtrahierer 84 in der Verbindungsleitung zwischen dem Speicher 20 und dem A/D-Wandler 56. Der Plus-Eingang 86 ist mit dem 6 LSB-Ausgang des Speichers 20 und der Ausgang 88 ist mit dem Eingang des D/A-Wandlers 56 verbunden. Derselbe Effekt wie bei der Umschaltung nach dem zweiten Schuß in der Schaltung nach Figur 4 wird so ohne Umschaltung erreicht.

Die Übersteuerungsanzeige 90 signalisiert den Fall, daß die Signaländerungen z.B. durch Bewegungsartefakte zu groß sind, um unverzerrt gewandelt werden zu können. Diese Information kann z.B. dazu benutzt werden, die Dopplersignale als ungültig zu kennzeichnen oder auszublenden.

Bei der vorgeschlagenen Kombination von Ultraschall-Bild- und Dopplergeräten kann für die Doppler-Signalverarbeitungsschaltung die gesamte Steuerung für Fokussierung und Scan des Bildsystems unverändert mitverwendet werden. Bei einem zusätzlich analogen Dopplerteil ist das nicht der Fall. Darüber hinaus erfordert die vorgeschlagene Kombination nur wenige Abgleichvorgange im Prüffeld, deren Aufwand kleiner ist als der für eine vollständig analoge Kombination. Sie eignet sich auch für den Einbau einer Selbstdiagnose für Prüffeld, Service und Anwender.

## Patentansprüche

1. Digitales Hochfrequenz-Eingangsteil für ein kombiniertes B-Bild/Doppler-Ultraschallgerät, welches Eingangsteil ein aus Elementarwandlern aufgebautes Wandlerarray umfaßt, welches zur Sendung von Ultraschallimpulsen in und zum Empfang von hochfrequenten Echosignalen aus einem Zielgebiet vorgesehen ist, mit einer B-Bild-Signalverarbeitungsschaltung, die eine Anzahl von untereinander gleichen Kanälen umfaßt, in denen jeweils ein Analog-Digital-Wandler (10) angeordnet ist, wobei jeder Kanal einem Elementarwandler zugeordnet ist und die empfangenen hochfrequenten Echosignale den Analog-Digital-Wandlern zugeführt werden, **dadurch gekennzeichnet,** daß die Ausgänge (12) der Analog-Digital-Wandler (10) mit jeweils einer Doppler-Signalverarbeitungsschaltung zur Gewinnung von hochfrequenten Dopplersignalen von Bewegtzielechos verbunden sind, daß die in den Kanälen angeordnete, für B-Bildgebung und Dopplersignale gemeinsame Signalverarbeitungsschaltung vor dem Analog-Digital-Wandler (10) jeweils einen Subtrahierer (2), der bei mehreren aufeinanderfolgenden Sendeimpulsen in dasselbe Zielgebiet von den einem ersten Eingang (4) zugeführten augenblicklichen Echosignalen die einem zweiten Eingang (32) zugeführten Echosignale des vorangegangenen Ultraschall-Impulses zeitrichtig abzieht, und einen darauffolgenden Verstärker (36,40) mit umschaltbarem Verstärkungsfaktor umfaßt, wobei die Doppler-Signalverarbeitungsschaltung nach dem Analog-Digital-Wandler (10) einen Umschalter (42) aufweist, der in Abhängigkeit des gewählten Verstärkungsfaktors des Verstärkers (36,40) die einzelnen Bits des Analog-Digital- Wandlers (10) unterschiedlich gewichtet einem ersten Eingang (14,15) eines Addierers (16) zur weiteren Signalverarbeitung zuführt.

2. Eingangsteil nach Anspruch 1, **dadurch gekennzeichnet,** daß die Doppler-Signalverarbeitungsschaltung weiterhin einen ersten Speicher (20) und einen ersten Digital-Analog-Wandler (26) umfaßt, daß der Ausgang des Addierers mit einem Eingang (18) des Speichers (20) verbunden ist, daß der Ausgang (22) des ersten Speichers (20) mit einem zweiten Eingang (28) des Addierers (16) und mit dem Eingang (24) des Digital-Analog-Wandlers (26) verbunden ist und daß der Ausgang (30) des Digital-Analog-Wandlers (26) mit dem zweiten Eingang (32) des Subtrahierers (2) verbunden ist, wobei der erste Eingang (4) des Subtrahierers (2) einem Elementarwandler zugeordnet ist.

3. Eingangsteil nach Anspruch 1 oder 2, **dadurch gekennzeichnet,** daß der Ausgang (12) des Analog-Digital-Wandlers (10) über den Umschalter (42) bei niedriger Verstärkung des Verstärkers (36, 40) mit den höchstwertigen Biteingängen (15) und bei hoher Verstärkung mit den niederwertigeren Biteingängen (14) des ersten Eingangs des Addierers (16) verbunden ist und daß die hohe Verstärkung um den Faktor 2ⁿ über der niedrigen Verstärkung liegt, wobei n der Anzahl der verschobenen Bits entspricht.

4. Eingangsteil nach Anspruch 2 oder 3, **dadurch gekennzeichnet,** daß der erste Digital-Analog-Wandler (26) durch einen zweiten und einen dritten Digital-Analog-Wandler (56,58) kleinerer Bitbreite ersetzt ist, wobei die Summe der Bitbreiten des zweiten und dritten Digital- Analog-Wandlers (56,58) gleich der Bitbreite des ersten Digital-Analog-Wandlers (26) ist, daß die Ausgänge des zweiten und dritten Digital-Analog-Wandlers (56,58) mit den Eingängen (66,70) eines analogen Summierers (68) verbunden sind, wobei der Ausgang des zweiten Digital-Analog-Wandlers (56) für die niedrigstwertigen Bits über einen Abschwächer (64) mit dem einen Eingang (66) des analogen Summierers (68) verbunden ist und daß der Ausgang des analogen Summierers (68) über ein erstes Tiefpaßfilter (72) mit dem zweiten Eingang (32) des Subtrahierers (2) verbunden ist, wobei dem einem Elementarwandler zugeordneten ersten Eingang (4) des Subtrahierers (2) ein zweites Tiefpaßfilter (74) vorgeschaltet ist.

5. Eingangsteil nach einem der Ansprüche 1 bis 3, **dadurch gekennzeichnet,** daß ein zweiter Speicher (76) vorgesehen ist, in dem nach einer zwei Abgleichschritte umfassenden Abgleichphase Korrekturwerte gespeichert sind und daß die Korrekturwerte die Amplitudenfehler der analogen Bauteile (64,68,72,2) und des ersten Digital-Analog-Wandlers (26) in dem Zweig kompensieren sollen, über den das vorangegangene Signal dem Subtrahierer (2) zugeführt wird, wobei in der Abgleichphase die Differenz von aus einem Testsignal in einem ersten Abgleichschritt gewonnenen Signalen und den aus demselben Testsignal in einem zweiten Abgleichschritt gewonnenen Signale als Korrekturwerte im zweiten Speicher (76) abgelegt werden.

6. Eingangsteil nach Anspruch 4, **dadurch gekennzeichnet,** daß ein zweiter Speicher (76) vorgesehen ist, in dem nach einer zwei Abgleichschritte umfassenden Abgleichphase Korrekturwerte gespeichert sind und daß die Korrekturwerte die Amplitudenfehler der analogen Bauteile (64,68,72,2) und des zweiten und dritten Dlgital-Analog-Wandlers (56,68) in dem Zweig kompensieren sollen, über den das vorangegangene Signal dem Subtrahierer (2) zugeführt wird, wobei in der Abgleichphase die Differenz von aus einem Testsignal in einem ersten Abgleichschritt gewonnenen Signalen und den aus demselben Testsignal in einem zweiten Abgleichschritt gewonnenen Signale als Korrekturwerte im zweiten Speicher (76) abgelegt werden.

7. Eingangsteil nach Anspruch 5 oder 6, **dadurch gekennzeichnet,** daß das Testsignal eine lineare Rampenfunktion ist, deren Steigung so gewählt ist, daß bei der gewählten Wandlungsrate des Analog-Digital-Wandlers (10) alle Binärwerte mindestens einmal auftreten.

8. Eingangsteil nach einem der Ansprüche 5 bis 7, **dadurch gekennzeichnet,** daß der Adreßeingang (78) des zweiten Speichers (76) mit den höchstwertigsten Bits des Ausgangs des ersten Speichers (20) verbunden ist, daß der Schreibeingang (79) des zweiten Speichers (76) mit dem Ausgang (12) des Analog-Digital-Wandlers (10) verbunden ist, daß der Leseausgang (80) des zweiten Speichers (76) mit einem ersten Eingang (82) eines zweiten Subtrahierers (84) verbunden ist, wobei der zweite Eingang (86) des zweiten Subtrahierers (84) mit dem Ausgang des Analog-Digital-Wandlers (10) und der Ausgang (88) des zweiten Subtrahierers (84) mit der B-Bild-Signalverarbeitungsschaltung verbunden ist.

9. Eingangsteil nach Anspruch 8, **dadurch gekennzeichnet,** daß ein erster Schalter (92) vorgesehen ist, um den Ausgang (88) des zweiten Subtrahierers (84) mit dem Eingang des Umschalters (42) zu verbinden, und daß ein zweiter Schalter (94) vorgesehen ist, um den Ausgang des Analog- Digital-Wandlers (10) gleichzeitig mit der Betätigung des ersten Schalters (92) vom Eingang des Umschalters (42) zu trennen.

10. Eingangsteil nach einem der Ansprüche 1 bis 9, **dadurch gekennzeichnet,** daß eine Übersteuerungsanzeige (90) mit dem Eingang der B-Bild-Signalverarbeitungsschaltung verbunden ist, die anzeigt, daß die Signaländerungen zu groß sind, um unverzerrt gewandelt werden zu können.

11. Eingangsteil nach einem der Ansprüche 1 bis 10, **dadurch gekennzeichnet,** daß die B-Bild-Signalverarbeitungsschaltung in jedem Kanal einen Signalspeicher (46) zum Speichern des digitalisierten Festzielechos und des digitalisierten Dopplerdifferenzsignals umfaßt.

12. Eingangsteil nach Anspruch 11, **dadurch gekennzeichnet,** daß das digitale Festzielecho und das Doppler-Differenzsignal nacheinander im Signalspeicher (46) gespeichert werden.

## Claims

1. Digital high-frequency input section for a combined B-image/Doppler ultrasonic appliance, which input section comprises a transducer array which is made up of individual transducers and which is provided for the transmission of ultrasonic pulses into, and for the reception of high-frequency echo signals from, a target area, having a B-image signal-processing circuit which comprises a number of mutually identical channels, in each of which an analog/digital converter (10) is disposed, each channel being assigned to an individual transducer and the received high-frequency echo signals being fed to the analog/digital converters, characterized in that the outputs (12) of the analog/digital converters (10) are connected to one Doppler signal-processing circuit in each case for obtaining high-frequency Doppler signals from moving-target echoes, in that the signal-processing circuit disposed in the channels and common to B-image provision and Doppler signals in each case comprises, upstream of the analog/digital converter (10), a subtracter (2) which, for a plurality of consecutive pulses transmitted into the same target region, subtracts from the instantaneous echo signals fed to a first input (4) the echo signals, fed to a second input (32), of the preceding ultrasonic pulse in a time-correlated manner, and a downstream amplifier (36, 40) with switchable gain factor, the Doppler signal processing circuit having, downstream of the digital converter (10), a switch (42) which, depending on the chosen gain factor of the amplifier (36, 40) , feeds the individual bits from the analog/digital converter (10) with different weighting to a first input (14, 15) of an adder (16) for the purpose of further signal processing.

2. Input section according to Claim 1, characterized in that the Doppler signal-processing circuit furthermore comprises a first memory (20) and a first digital/analog converter (26), in that the output of the adder is connected to an input (18) of the memory (20), in that the output (22) of the first memory (20) is connected to a second input (28) of the adder (16) and to the input (24) of the digital/analog converter (26), and in that the output (30) of the digital/analog converter (26) is connected to the second input (32) of the subtracter (2), the first input (4) of the subtracter (2) being assigned to an individual transducer.

3. Input section according to Claim 1 or 2, characterized in that, for low gain of the amplifier (36, 40), the output (12) of the analog/digital converter (10) is connected via the switch (4a) to the highest-value bit inputs (15) of the first input of the adder (16) and, for high gain, it is connected to the low-value bit inputs (14) of the first input of the adder (16), and in that the high gain exceeds the low gain by a factor of 2ⁿ, where n corresponds to the number of shifted bits.

4. Input section according to Claim 2 or 3, characterized in that the first digital/analog converter (26) is replaced by a second and a third digital/analog converter (56, 58) having smaller bit width, the sum of the bit widths of the second and third digital/analog converters (56, 58) being equal to the bit width of the first digital/analog converter (26), in that the outputs of the second and third digital/analog converters (56, 58) are connected to the inputs (66, 70) of an analog summator (68), the output of the second digital/analog converter (56) being connected for the lowest-value bits via an attenuator (64) to one input (66) of the analog summator (68), and in that the output of the analog summator (68) is connected via a first low-pass filter (72) to the second input (32) of the subtracter (2), a second low-pass filter (74) being connected upstream of the first input (4), assigned to an individual converter, of the subtracter (2).

5. Input section according to one of Claims 1 to 3, characterized in that a second memory (76) is provided, in which, after an adjustment phase comprising two adjustment steps, correction values are stored, and in that the correction values are intended to compensate for the amplitude errors of the analog components (64, 68, 72, 2) and of the first digital/analog converter (26) in the branch via which the preceding signal is fed to the subtracter (2), the difference between signals obtained from a test signal in a first adjustment step and the signals obtained from the same test signal in a second adjustment step being stored as correction values in the second memory (76) in the adjustment phase.

6. Input section according to Claim 4, characterized in that a second memory (76) is provided in which, after an adjustment phase, comprising two adjustment steps, correction values are stored and in that the correction values are intended to compensate for the amplitude errors of the analog components (64, 66, 72, 2) and of the second and third digital/analog converters (56, 68) in the branch via which the preceding signal is fed to the subtracter (2), the difference between signals obtained from a test signal in a first adjustment step and the signals obtained from the same test signal in a second adjustment step being stored as correction values in the second memory (76) in the adjustment phase.

7. Input section according to Claim 5 or 6, characterized in that the test signal is a linear ramp function whose slope is chosen so that, at the chosen conversion rate of the analog/digital converter (10), all the binary values occur at least once.

8. Input section according to one of Claims 5 to 7, characterized in that the address input (78) of the second memory (76) is connected to the highest-value bits of the output of the first memory (20), in that the write input (79) of the second memory (76) is connected to the output (12) of the analog/digital converter (10), and in that the read output (80) of the second memory (76) is connected to a first input (82) of a second subtracter (84), the second input (86) of the second subtracter (84) being connected to the output of the analog/digital converter (10) and the output (88) of the second subtracter (84) being connected to the B-image signal-processing circuit.

9. Input section according to Claim 8, characterized in that a first switch (92) is provided in order to connect the output (88) of the second subtracter (84) to the input of the switch (42), and in that a second switch (94) is provided in order to isolate, simultaneously with the actuation of the first switch (92), the output of the analog/digital converter (10) from the input of the switch (42).

10. Input section according to one of Claims 1 to 9, characterized in that an overdrive display (90) is connected to the input of the B-image signal-processing circuit and indicates that the signal changes are too large to be capable of being converted without distortion.

11. Input section according to one of Claims 1 to 10, characterized in that the B-image signal-processing circuit comprises, in each channel, a signal memory (46) for storing the digitized fixed-target echoes and the digitized Doppler differential signal.

12. Input section according to Claim 11, characterized in that the digital fixed-target echo and the Doppler-differential signal are stored consecutively in the signal memory (46).

## Revendications

1. Partie entrée numérique à haute fréquence pour un appareil à ultrasons combiné à image B/Doppler, laquelle partie entrée comprend un réseau de transducteurs, constitué par des transducteurs élémentaires et qui est prévu pour l'émission d'impulsions ultrasonores dans une région cible et pour la réception de signaux d'échos à haute fréquence provenant de cette région cible, et comportant un circuit de traitement des signaux d'image B, qui comprend un certain nombre de canaux identiques, dans chacun desquels est disposé un convertisseur analogique/numérique (10), chaque canal étant associé à un transducteur élémentaire, et des signaux d'échos à haute fréquence reçus étant envoyés aux convertisseurs analogique/numérique, caractérisée par le fait que les sorties (12) des convertisseurs analogique/numérique (10) sont reliées respectivement à un circuit de traitement de signaux Doppler pour l'obtention de signaux Doppler à haute fréquence à partir d'échos de cibles mobiles, que le circuit de traitement de signaux, qui est disposé dans les canaux et est commun pour l'information (9B) et pour l'information de signaux Doppler, comporte, en amont du convertisseur analogique/numérique, respectivement un soustracteur (2), qui, dans le cas de plusieurs impulsions d'émission successives envoyées à la même région cible, soustrait en temps opportun des signaux d'échos, envoyés à une seconde entrée (32), de l'impulsion ultrasonore précédente, des signaux d'échos instantanés envoyés à la première entrée (4), et un amplificateur (36, 40) branché en aval et possédant un facteur d'amplification commutable, le circuit de traitement de signaux Doppler comportant, en aval du convertisseur analogique/numérique (10), un commutateur (42), qui, en fonction du facteur d'amplification choisi de l'amplificateur (36, 40), envoie les bits individuels, pondérés différemment, du convertisseur analogique/numérique (10) à une première entrée (14, 15) d'un additionneur (16) pour la poursuite du traitement des signaux.

2. Partie entrée suivant la revendication 1, caractérisée par le fait que le circuit de traitement des signaux Doppler comprend en outre une première mémoire (20) et un premier convertisseur numérique/analogique (26), que la sortie de l'additionneur est reliée à une entrée (18) de la mémoire (20), que la sortie (22) de la première mémoire (20) est reliée à une seconde entrée (28) de l'additionneur (16) et à l'entrée (24) du convertisseur numérique/analogique (26), et que la sortie (30) du convertisseur analogique/numérique (26) est reliée à la seconde entrée (32) du soustracteur (2), la première entrée (4) du soustracteur (2) étant associée à un transducteur élémentaire.

3. Partie entrée suivant la revendication 1 ou 2, caractérisée par le fait que la sortie (12) du convertisseur analogique/numérique (10) est reliée, par l'intermédiaire du commutateur (42), dans le cas d'une faible amplification de l'amplificateur (36, 40), aux entrées de bits de poids maximum (15) et, dans le cas d'une amplification intense, aux entrées de bits de poids plus faible (14) de la première entrée de l'additionneur (16), et que l'amplification intense est supérieure, du facteur 2ⁿ, à l'amplification faible, n étant le nombre des bits correspondant au nombre des bits déplacés.

4. Partie entrée suivant la revendication 2 ou 3, caractérisée par le fait que le premier convertisseur analogique/numérique (26) est remplacé par des second et troisième convertisseurs numérique/analogique (56, 58) possédant une largeur en bits plus faible, la somme des largeurs en bits des second et troisième convertisseurs numérique/analogique (56, 58) étant égale à la largeur en bits du premier convertisseur numérique/analogique (26), que les sorties des second et troisième convertisseurs numérique/analogique (56, 58) sont reliées aux entrées (66, 70) d'un additionneur analogique (68), la sortie du second convertisseur analogique/numérique (56) pour les bits de poids les plus faibles étant reliée, par l'intermédiaire d'une unité d'affaiblissement (64), à une entrée (66) de l'additionneur analogique (68), et que la sortie de l'additionneur analogique (68) est reliée, par l'intermédiaire d'un premier filtre passe-bas (72), à la seconde entrée (32) du soustracteur (2), un second filtre passe-bas (74) étant branché en amont d'une première entrée (4) du soustracteur (2), associée à un transducteur élémentaire.

5. Partie entrée suivant l'une des revendications 1 à 3, caractérisée par le fait qu'il est prévu une seconde mémoire (76), dans laquelle des valeurs de correction sont mémorisées après une phase d'équilibrage englobant deux états d'équilibrage, et que les valeurs de correction doivent compenser les erreurs d'amplitude des composants analogiques (64, 68, 72, 2) et du premier convertisseur analogique/numérique (26) dans la branche, par l'intermédiaire de laquelle le signal précédent est envoyé au soustracteur (2), la différence entre des signaux obtenus à partir d'un signal de test lors d'une première étape d'équilibrage, et les signaux obtenus à partir du même signal de test lors d'une seconde étape d'équilibrage étant mémorisée, pendant la phase d'équilibrage, en tant que valeurs de correction dans la seconde mémoire (76).

6. Partie entrée suivant la revendication 4, caractérisée par le fait qu'il est prévu une seconde mémoire (76), dans laquelle des valeurs de correction sont mémorisées après une phase d'équilibrage comprenant deux étapes d'équilibrage, et que les valeurs de correction doivent compenser les erreurs d'amplitude des composants analogiques (64, 68, 72, 2) et des second et troisième convertisseurs numérique/analogique (56, 58) dans la branche, par l'intermédiaire de laquelle le signal précédent est envoyé au soustracteur (2), la différence entre des signaux obtenus à partir d'un signal de test pendant une première étape d'équilibrage et les signaux obtenus à partir du même signal de test dans une seconde étape d'équilibrage étant mémorisés pendant la phase d'équilibrage, en tant que valeurs de correction dans la seconde mémoire (76).

7. Partie entrée suivant la revendication 5 ou 6, caractérisée par le fait que le signal de test est une fonction en rampe linéaire, dont la pente est choisie de manière que toutes les valeurs binaires apparaissent au moins une fois pour la cadence choisie de conversion du convertisseur analogique/numérique.

8. Partie entrée suivant l'une des revendications 5 à 7, caractérisée par le fait que l'entrée d'adresse (78) de la seconde mémoire (76) est reliée aux bits de poids maximum de la sortie de la première mémoire (20), que l'entrée d'enregistrement (79) de la seconde mémoire (76) est reliée à la sortie (12) du convertisseur analogique/numérique (10), que la sortie de lecture (80) de la seconde mémoire (16) est reliée à la première entrée (82) d'un second soustracteur (84), la seconde entrée (86) du second soustracteur (84) étant reliée à la sortie du convertisseur analogique/numérique (10), tandis que la sortie (88) du second soustracteur (84) est reliée au circuit de traitement de signaux d'images B.

9. Partie entrée suivant la revendication 8, caractérisée par le fait qu'il est prévu un premier interrupteur (92) servant à relier la sortie (88) du second soustracteur (84) à l'entrée du commutateur (42), et qu'il est prévu un second interrupteur (94) servant à séparer la sortie du convertisseur analogique/numérique (10) par rapport à l'entrée du commutateur (42) en même temps que s'effectue l'actionnement du premier interrupteur (92).

10. Partie entrée suivant l'une des revendications 1 à 9, caractérisée par le fait qu'une unité de surmodulation (90) est reliée à l'entrée du circuit de traitement de signaux d'image (B), qui indique que les variations des signaux sont trop importantes pour pouvoir être converties sans distorsions.

11. Partie entrée suivant l'une des revendications 1 à 10, caractérisée par le fait que le circuit de traitement de signaux d'image B comprend, dans chaque canal, une mémoire de signaux (46) servant à mémoriser le signal d'écho de cible fixe numérisé et le signal de différence Doppler numérisé.

12. Partie entrée suivant la revendication 11, caractérisée par le fait que l'écho de cible fixe numérique et le signal de différence Doppler sont numérisés successivement dans la mémoire de signaux (46).
